# EUROPÄISCHE PATENTSCHRIFT

(11) **EP 1 085 962 B1**
(45) Veröffentlichungstag und Bekanntmachung des Hinweises auf die Patenterteilung: **24.07.2002**
(21) Anmeldenummer: 99920637.8
(22) Anmeldetag: 10.04.1999
(51) Int. Cl.: B23K 37/047, B62D 65/00

(54) **VORRICHTUNG ZUM HANDHABEN MINDESTENS EINES SPANNRAHMENS, INSBESONDERE FÜR DIE MONTAGE VON ROHKAROSSERIEN VON FAHRZEUGEN**
DEVICE FOR HANDLING AT LEAST ONE TENSIONING FRAME, ESPECIALLY FOR MOUNTING VEHICLE SHELLS
DISPOSITIF POUR MANIPULER AU MOINS UN CADRE DE SERRAGE, NOTAMMENT POUR LE MONTAGE DE COQUES DE VEHICULES

(30) Priorität: 16.04.1998 DE 29806823 U
(43) Veröffentlichungstag der Anmeldung: 28.03.2001
(73) Patentinhaber: KUKA Schweissanlagen GmbH, 86165 Augsburg (DE)
(72) Erfinder: SEMMLINGER, Wilfried, D-86343 Königsbrunn (DE); KIKUT, Botho, D-86157 Augsburg (DE); KRAUS, Gerhard, D-86316 Friedberg (DE); TAUCHEN, Günther-Eberhard, D-86356 Neusäss (DE)
(74) Vertreter: Ernicke, Hans-Dieter, Dipl.-Ing.
(86) Internationale Anmeldenummer: EP9902439
(87) Internationale Veröffentlichungsnummer: WO9954083

(56) Entgegenhaltungen:
- EP-A- 0 734 941
- EP-A- 0 835 717
- US-A- 5 267 683
- US-A- 5 427 300

## Beschreibung

Die Erfindung bezieht sich auf eine Vorrichtung zum Handhaben von mindestens einem Spannrahmen.

Eine solche Vorrichtung ist aus der US-A-5,267,683, die als nächstliegender Stand der Technik angeschen ist, bekannt. Einer Bearbeitungsstation wird die Bodengruppe einer Fahrzeugrohkarosserie längs einer Transferlinie zugeführt und dort mit Seiten- und Dachteilen vereint. Die Seiten- und Dachteile werden an Spannrahmen in der Bearbeitungsstation zugeführt und in eine geometrisch genaue Montageposition zur Bodengruppe gebracht, in der anschließend eine örtliche Verschweißung der Einzelteile stattfindet. Die Spannrahmen werden mit ortsgebundenen Zuführeinrichtungen zugeführt.

Eine solche Vorrichtung muss außerdem dafür geeignet sein, Spannrahmen für verschiedene Fahrzeugtypen bereitzustellen und diese in die Arbeitspostion zu bringen. Dies wird dadurch gelöst, dass man mehrere Spannrahmen parallel zur Transferlinie beweglich führt, wobei im Bereich der Bearbeitungsstation eine zusätzliche Bewegung der Spannrahmen quer zur Transferlinie erforderlich ist, um die Arbeits- bzw. Schweißstation zu erreichen. Bei den bekannten Vorrichtungen wird hierfür viel Platz und ein großer konstruktiver bewegungstechnischer Aufwand benötigt.

Aus der EP-A-0 835 717 ist es bekannt, die Spannrahmen mit eigenen und angetriebenen Fahrwerken zu versehen, die lineare Bewegungen längs und quer zur Transferlinie ausführen. Der Erfindung liegt daher die Aufgabe zugrunde, eine bezondere form des Handhabung von Spannrahmen zu entwickeln, die platz- und koztensparend funktioniert und außerdem mehr Bewegungsfreiheit der im bereich der Bearbeitungstation angeordneten Industrie-Roboken gewährleistet.

Diese Aufgabe wird mit den Merkmalen des Anspruches 1 gelöst. Die erfindungsgemäße Vorrichtung bietet eine bessere und platzsparendere Möglichkeit zur Handhabung der Spannrahmen.

In einer bevorzugten Ausführungsform wird der einzelne Spannrahmen über eine Haltevorrichtung mit Hilfe von zwei Lenkern gehalten und geführt, die nach Art einer Viergelenkkette mit der Haltevorrichtung verbunden sind. Diese Lenker sind an Schlitten gelagert und drehbar angetrieben, welche längs oder im Winkel zur Transferlinie in einer gesteuerten Weise bewegt werden. Durch die Überlagerung der Vorschubbewegung der Schlitten und der Schwenkbewegung der Lenker kann eine Steuerung herbeigeführt werden, welche die Haltevorrichtung und die daran befestigten Spannrahmen im wesentlichen linear und quer zur Transferlinie bewegt.

Eine solche Anordnung ist auch dafür geeignet, den einzelnen Spannrahmen parallel zur Transferlinie zu bewegen und in einen Spannrahmenspeicher zu übergeben, wobei die Lenker eine entgegengesetzte Schwenkbewegung im Verhältnis zur Annäherung an die Rohkarosserie ausführen.

Es hat sich im Rahmen der Erfindung als vorteilhaft erwiesen, wenn der einzelne Spannrahmen in seiner Arbeitsstellung an einem ortsfesten Gerüst längs und quer zur Transferlinie beweglich geführt sowie zentriert und verspannt ist. Auf diese Weise wird erreicht, daß die zur Bewegung des Spannrahmens benötigten Schlitten und Lenker in der Montage- bzw. Schweißstellung vom Gewicht des Spannrahmens und der daran befestigten Werkzeuge entlastet werden und der Spannrahmen reproduzierbar genau in der Arbeitsstellung gehalten wird.

Weitere Merkmale der Erfindung ergeben sich aus den Unteransprüchen.

In den Ansprüchen ist eine Lösungs-Alternative angegeben. Danach wird der einzelne Lenker als Knickarm nach Art eines Kniegelenkhebels ausgebildet. Im Kniegelenk befindet sich ein weiterer Schwenkantrieb für den freien Schenkel des Knickarmes. Somit besitzt der einzelne Lenker zwei Schwenkantriebe, die so gesteuert sind, daß die am freien Schenkel angelenkte Haltevorrichtung eine lineare Bewegung quer zur Transferlinie ausführt.

Bei dieser Ausführungsvariante, die selbständigen Erfindungscharakter besitzt, werden die Schwenkbewegungen von zwei Schwenkantrieben aufeinander abgestimmt, so daß es auf die Hubbewegung der Schlitten, die längs der Transferlinie bewegbar sind, nicht ankommt.

Bei einer weiteren selbständige Ausführungsform zur Lösung der gestellten Aufgabe wird für jeden Spannrahmen nur ein Lenker benötigt, der an die Mitte der Haltevorrichtung gelenkig und mit einem Schwenkantrieb angreift. Das andere Ende des Lenkers ist in einer ortsfesten Führung mit Hilfe eines Schlittens verschiebbar, wobei die Resultierende der Schlittenführung und der Schwenkbarkeit der Haltevorrichtung gegenüber dem Lenker dazu führt, daß die Haltevorrichtung aus einer parallel zur Transferlinie befindlichen Grundstellung in eine schräg dazu sich erstreckende Parkstellung bewegt, wobei aus der Parkstellung eine Übergabe an einen seitlich angeordneten Spannrahmenspeicher erfolgen kann. Bei einer solchen Anordnung ist eine Schlittenführung parallel zur Transferlinie entbehrlich.

Die Erfindung ist in den Zeichnungen beispielsweise und schematisch dargestellt. Im einzelnen zeigen:
- Figur 1:: eine Draufsicht auf eine Transferlinie mit Bearbeitungsstation und parallel dazu angeordneten Führungen für Spannrahmen,
- Figur 2:: eine Seitenansicht der Anordnung gemäß Figur 1 gemäß Pfeil A,
- Figur 3:: eine Stirnansicht auf die Bearbeitungsstation mit einer seitlich davon angeordneten Führung für Spannrahmen,
- Figur 4:: eine Draufsicht auf eine Anordnung zum Bewegen von Spannrahmen mit Hilfe von Knickarmen,
- Figur 5:: eine Seitenansicht der Anordnung gemäß Figur 4 in Richtung des Pfeiles B und
- Figur 6:: eine schematische Draufsicht auf eine Anordnung zur Bewegung von Spannrahmen in einer weiteren Variante.

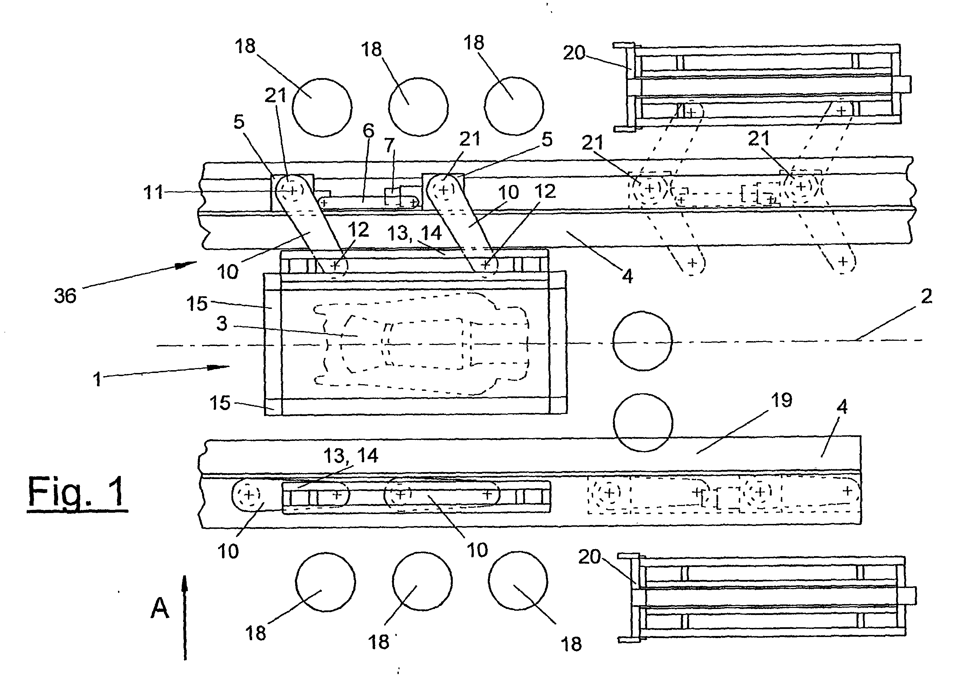

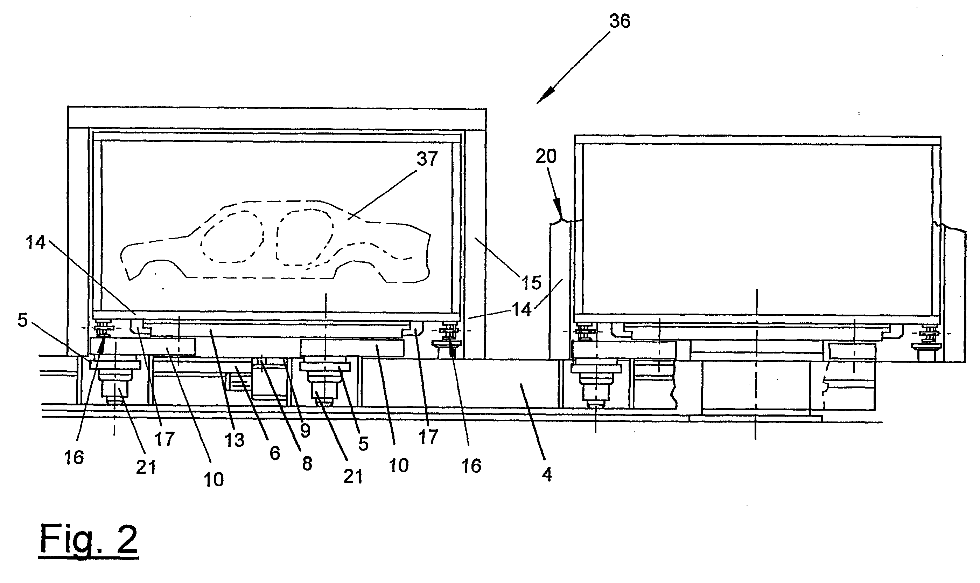

Beim Ausführungsbeispiel der Figuren 1 bis 3 ist eine Bearbeitungsstation (1) mit einer Transferlinie (2) symbolisch dargestellt. In der Bearbeitungsstation (1) befindet sich ein Bauteil (3), z.B. die Rohkarosserie von einem Fahrzeug, wobei ein oder mehrere weitere Werkstücke (37), bevorzugt Seitenteile, in eine reproduzierbare geometrisch bestimmte Position zur Rohkarosserie (3) gebracht werden können. Die Bearbeitungsstätion (1) besitzt eine Handhabungsvorrichtung (36), die ein oder mehrere Spannrahmen (14) seitlich an die Rohkarosserie (3) zustellen kann. Die Spannrahmen (14) sind im bevorzugten Ausführungsbeispiel mit den besagten Seitenteilen (37) beladen, die z.B. in Figur 2 schematisch und mit gestrichelten Linien angedeutet sind. Die Spannrahmen (14) können alternativ auch leer sein und lediglich eine Spannund Bearbeitungsfunktion für die dann bereits vorab mit den Seitenteilen oder anderen Werkstücken bestückte Rohkarosserie (3) zu bieten.

Die Handhabungsvorrichtung (36) hat mindestens einen verfahrbaren und drehbaren Lenker (10,22,30) mit einer Haltevorrichtung (13) für den Spannrahmen (14). Nachfolgend sind hierfür verschiedene Ausführungsformen angegeben.

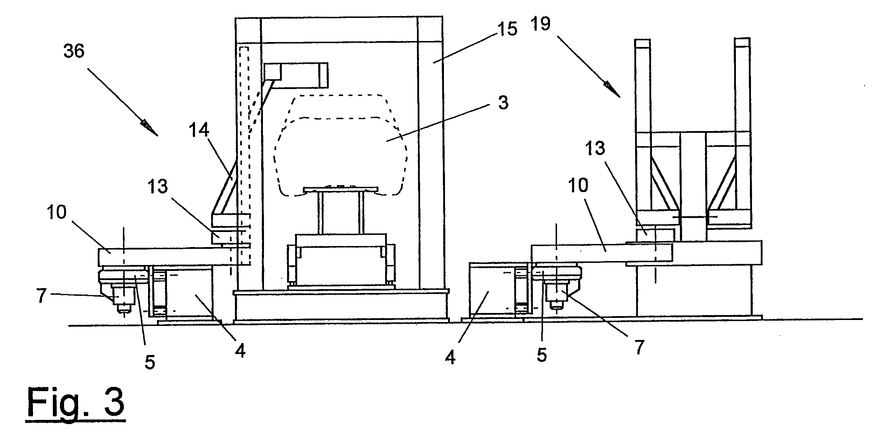

Parallel zur Transferlinie (2) befindet sich neben der Bearbeitungsstation (1) auf jeder Seite eine Führung (4), an welcher ein oder mehrere Schlitten (5) parallel zur Transferlinie (2) bewegbar geführt sind. Figur 3 zeigt, daß diese Schlitten (5) z.B. an der Außenseite der kastenförmigen Führung (4) beweglich und fliegend gelagert sind.

An jedem Schlitten (5) ist gemäß Figur 1 ein Lenker (10) längs einer vertikalen Achse (11) drehbar gelagert und mit Hilfe eines Schwenkantriebes (21) verstellbar. Die in Distanz zueinander befindlichen Schlitten (5) sind vorzugsweise untereinander durch eine Kupplungsstange (6) verbunden und bewegen sich synchron. Zumindest einer der Schlitten (5) besitzt einen Vorschubantrieb (7), welcher den Schlitten und damit den anderen Schlitten und die Lenker (10) längs der Führung (4) zwangsläufig bewegt. Wie die Figur 2 zeigt, wirkt der Vorschubantrieb (7) über ein Ritzel (8) auf eine ortsfest an der Führung (4) befindliche Zahnstange (9) ein.

An den freien Enden der Lenker (10) ist zumindest eine Haltevorrichtung (13) im Bereiche der Achsen (12) gelenkig angebracht. Die einzelne Haltevorrichtung (13) kann in beliebig geeigneter Weise ausgebildet sein und hat z.B. einen Haltebalken. Die Haltevorrichtung (13) trägt einen aufrechten Spannrahmen (14), wie dies speziell aus den Figuren 2 und 3 hervorgeht. Am Spannrahmen (14) sind ein oder mehrere Spann- bzw. Zentriereinheiten für die Werkstücke bzw. Seitenteile (37) in herkömmlicher Weise befestigt, um diese an der Rohkarosserie (3) in eine geometrisch bestimmte Position zu bringen.

Die Haltevorrichtung (13) kann mit dem daran befestigten Spannrahmen (14) vorzugsweise im wesentlichen linear und quer zur Transferlinie (2) bewegt werden, um Kollisionen zu vermeiden. Dazu sind die Schwenkbewegung der Schwenkantriebe (21) und die Vorschubbewegung des Vorschubantriebes (7) so aufeinander abgestimmt, daß sich als Resultierende diese lineare Querbewegung des Spannrahmens (14) ergibt.

Wie die Figuren 2 und 3 zeigen, befinden sich die Lenker (10), der Haltevorrichtung (13) und die Führung (4) mit den Schlitten (5) unterhalb der Kontur der Rohkarosserie (3). Dies hat den Zweck, daß die Beweglichkeit der seitlich von den Führungen (4) angeordneten Industrie-Roboter (18) nicht behindert wird. Die Folge davon ist, daß die Last der Haltevorrichtung (13), des Spannrahmens (14) und der Werkstücke voll auf den Lenkern (10) liegt, die um vertikale Achsen freitragende Belastungen aufnehmen. Um dabei eine sichere Zuordnung der Einzelteile der Rohkarosserie (3) zu gewährleisten, sind die einzelnen Spannrahmen (14) mit einem ortsfesten Gerüst (15) verbunden. Hierzu sind Längs- und Querführungen (16) zwischen dem Gerüst (15) und dem Spannrahmen (14) vorgesehen, um die Endstellung des Spannrahmens am Gerüst (15) herbeizuführen. Figur 2 zeigt weiterhin, daß zwischen dem Spannrahmen (14) und der Haltevorrichtung (13) eine oder mehrere Spannverbindungen (17) vorgesehen ist, welche das Befestigen des Spannrahmens (14) auf der Haltevorrichtung (13) während des Transportes längs der Führung (4) gewährleistet.

Das Ausführungsbeispiel der Figur 1 zeigt überdies, wie die Lenker (10) betätigt werden können, um den einzelnen Spannrahmen (14) aus der Bearbeitungsstation in eine Warteposition (19) oder in einen Spannrahmenspeicher (20) zu bewegen. Zu diesem Zweck ist vorgesehen, die Lenker (10) in eine Lage parallel zur Transferlinie (2) einzurichten. Damit sind die Spannrahmen (14) längs der Führung (4) beweglich, ohne über die Führung (4) seitlich hinauszukragen. Ist die Schlitten-Lenkeranordnung (5,10) in die Warteposition (19) gekommen, kann diese Anlage dort verharren, wenn eine zweite gleichwertige Anlage von einer anderen Warteposition in die Bearbeitungsstation (1) eingeführt wird.

Es ist aber auch möglich, den in der Warteposition (19) befindlichen Spannrahmen (14) in einen Spannrahmenspeicher (20) einzubringen, wozu eine entgegengesetzt gerichtete Schwenkbewegung der Lenker (10) in Verbindung mit einer gesteuerten Bewegung der Schlitten (5) erforderlich ist. Eine solche Bewegung ist im oberen rechten Teil der Figur 1 angedeutet.

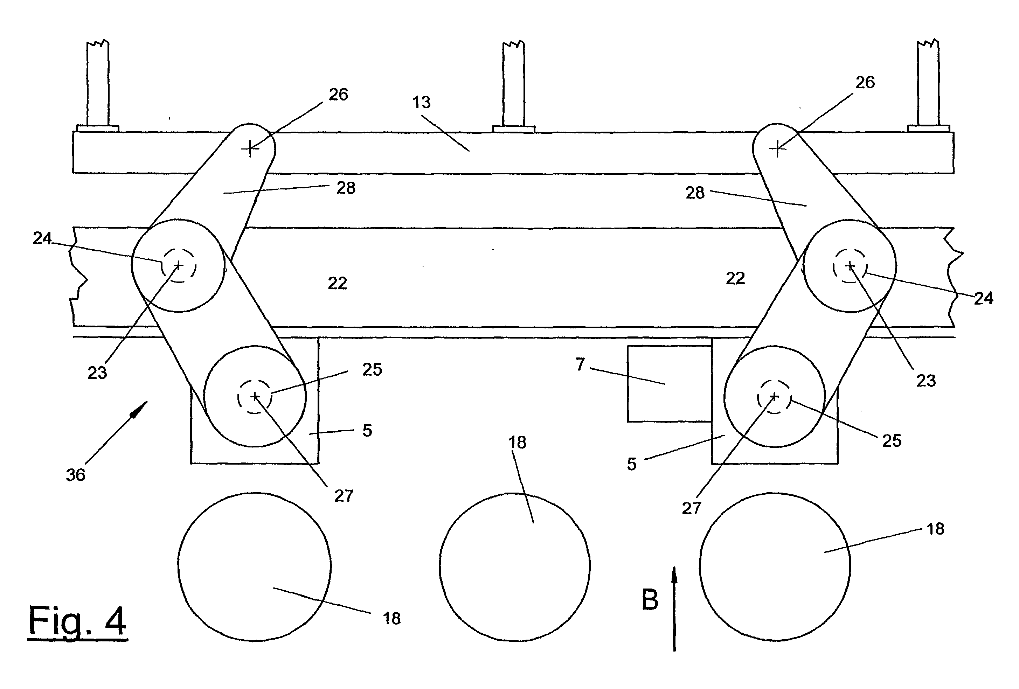

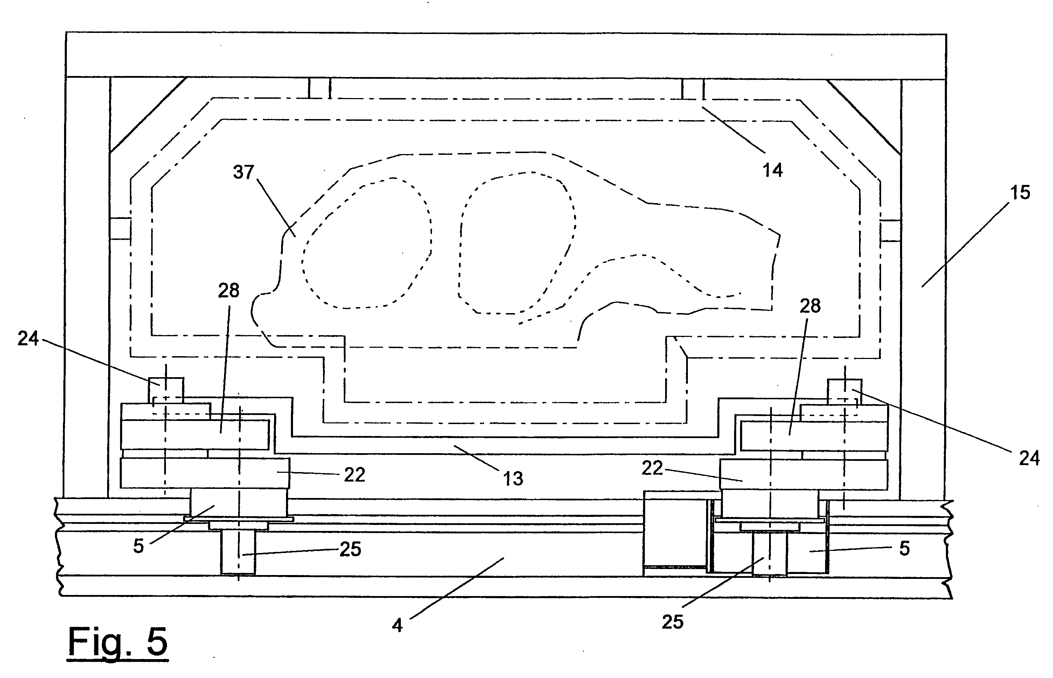

Im Beispiel der Figuren 4 und 5 ist eine erfinderisch selbständige Variante zur Ausführungsform der Figuren 1 bis 3 dargestellt.

Danach wird die einzelne Haltevorrichtung (13) durch zwei Knickarme (22) gehalten und geführt, wobei im Bereiche des Kniegelenkes (23) ein zusätzlicher Schwenkantrieb (24) für die Schwenkbewegung des freien Schenkels (28) vorgesehen ist. Die lineare Verschiebung der Haltevorrichtung (13) quer zur Transferlinie (2) wird damit durch Überlagerung der Schwenkbewegungen der Schwenkantriebe (24) und (27) herbeigeführt, so daß eine lineare Querbewegung der Haltevorrichtung (13) resultiert. Der freie Schenkel (28) des Knickarmes (22) ist über die Achse (26) an der Haltevorrichtung (13) angeschlossen. Die andere Achse (27) des Knickarmes (22) ist über den Schwenkantrieb (25) an einem Schlitten (5) drehbar gelagert und angetrieben, der parallel zur Transferlinie (2) entlang einer Führung (4) verstellbar ist, um die Haltevorrichtung (13) bzw. den daran befestigten Spannrahmen (14) aus der Bearbeitungsstation in eine Wartestation oder umgekehrt zu überführen.

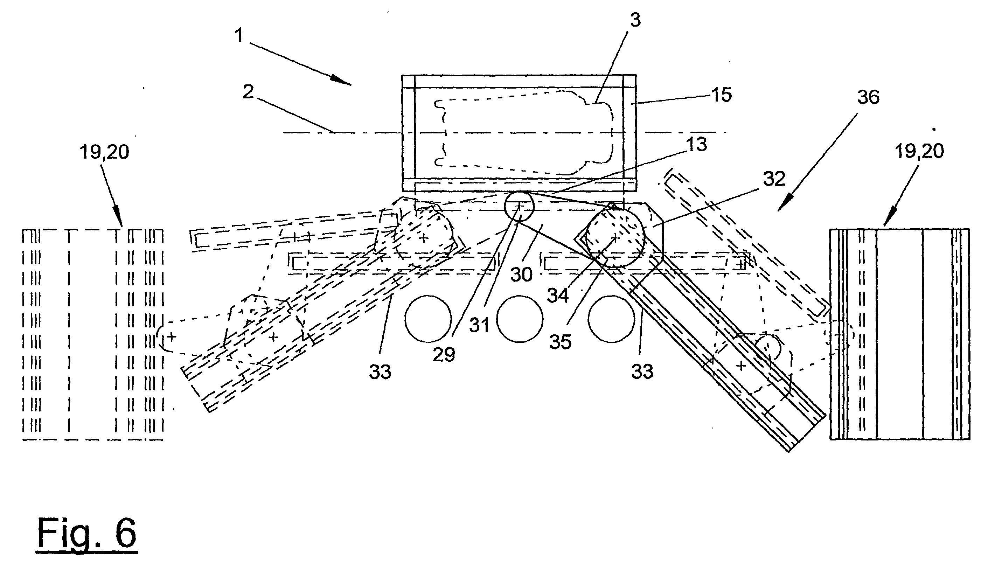

Das erfinderisch selbständige Ausführungsbeispiel der Figur 6 vermeidet die Anordnung einer Viergelenkkette zur Bewegung der Haltevorrichtung (13). Stattdessen ist in der Mitte (29) der Haltevorrichtung (13) ein Lenker (30) mit seiner Achse und Schwenkantrieb (31) drehbar gelagert und angetrieben, so daß die Haltevorrichtung (13) um diese Achse (Mitte der Haltevorrichtung) (29) eine Schwenkbewegung ausführen kann. Das andere Ende des Lenkers (30) ist über eine Achse (34) und einen Schwenkantrieb (35) an einem Schlitten (32) geführt, der längs einer ortsfesten Führung (33) beweglich ist. Wie die Figur 6 zeigt, sind beim Ausführungsbeispiel je Bearbeitungsstation zwei solche Führungen (33) vorgesehen, die sich von der Mitte (29) der Haltevorrichtung (13) nach außen öffnen. Damit ist die Möglichkeit gegeben, entweder die der einen Führung (33) oder der anderen Führung (33) zugeordneten Lenker (30) mit der ihnen zugeordneten Haltevorrichtung (13) in die Position vor der Bearbeitungsstation (1) zu bringen.

Seitlich von den Führungen (33) sind nach Bedarf Wartepositionen (19) bzw. Spannrahmenspeicher (20) vorgesehen, in welche die einzelnen Spannrahmen (14) abgestellt bzw. von ihnen entnommen werden können. Die Bewegung hierzu wird aus der Resultierende von zwei Schwenkantrieben (31,35) hergeleitet.

Abwandlungen der gezeigten Ausführungsbeispiele sind in verschiedener Weise möglich. Zum einen kann die Zustellbewegung der Spannrahmen (14) auch nicht linear sein. Ferner können zwei oder mehrere Lenker (10) übereinander angeordnet sein anstatt wie in Figur 1 und 2 nebeneinander. Zudem ist es möglich, die Lenker in einem entsprechenden Gestell seitlich anzuordnen, wobei sie im wesentlichen horizontale und parallel zur Transferlinie sich erstreckende Schwenkachsen (11) haben. Sie greifen dann seitlich an den Spannrahmen (14) an. Auch bei dieser Variante können zwei Lenker nebeneinander oder gegenüberliegend angeordnet sein. Die genannten Bauvarianten können zudem mit den anderen alternativ zur Gestaltung und Kinematik der Handhabungsvorrichtung (36) entsprechend der Ausführungsbeispiele 4 bis 6 kombiniert werden.

### BEZUGSZEICHENLISTE

- 1: Bearbeitungsstation
- 2: Transferlinie
- 3: Bauteil, Rohkarosserie
- 4: Führung
- 5: Schlitten
- 6: Kupplungsstange
- 7: Vorschubantrieb
- 8: Ritzel
- 9: Zahnstange
- 10: Lenker
- 11: Achse
- 12: Achse
- 13: Haltevorrichtung, Haltebalken
- 14: Spannrahmen
- 15: Gerüst
- 16: Längs- und Querführung
- 17: Spannverbindung
- 18: Industrieroboter
- 19: Warteposition
- 20: Spannrahmenspeicher
- 21: Schwenkantrieb
- 22: Knickarm
- 23: Kniegelenk
- 24: Schwenkantrieb
- 25: Schwenkantrieb
- 26: Achse
- 27: Achse
- 28: freier Schenkel
- 29: Mitte des Haltebalkens
- 30: Lenker
- 31: Schwenkantrieb
- 32: Schlitten
- 33: Führung
- 34: Achse
- 35: Schwenkantrieb
- 36: Handhabungsvorrichtung
- 37: Werkstück, Seitenteil

## Patentansprüche

1. Vorrichtung (36) zum Handhaben von einem oder mehreren Spannrahmen (14) für Bauteile (3), insbesondere Rohkarosserien von Fahrzeugen, in einer Bearbeitungsstation (1) mit einer Transferlinie (2), wobei die Handhabungsvorrichtung (36) ein oder mehrere drehbar angetriebene Lenker (10,30) besitzt, die an ihrem einen Ende in mindestens einem längs oder im Winkel zur Transferlinie (2) motorisch bewegbaren Schlitten (5,32) gelagert sind und an ihrem anderen Ende eine Haltevorrichtung (13) zur Aufnahme des Spannrahmens (14) aufweisen.

2. Vorrichtung nach Anspruch 1, **dadurch gekennzeichnet, dass** die Handhabungsvorrichtung (36) zwei nach Art einer Viergelenkkette angeordnete und um parallele Achsen (11) drehbare Lenker (10) aufweist.

3. Vorrichtung nach Anspruch 1 oder 2, **dadurch gekennzeichnet, dass** die Haltevorrichtung (13) den seinerseits aufrecht angeordneten Spannrahmen (14) gelenkig (12) hält, und dass der Vorschubantrieb (7) der Schlitten (5) und der Schwenkantrieb (21) der Lenker (10) so gesteuert sind, dass die Resultierende beider Bewegungen zu einer im wesentlichen linearen Verstellung der Haltevorrichtung (13) quer zur Transferlinie (2) führt.

4. Vorrichtung nach Anspruch 1, 2 oder 3, **dadurch gekennzeichnet, dass** der Spannrahmen (14) in seiner Arbeitsstellung an einem ortsfesten Gerüst (15) längs und quer zur Transferlinie beweglich (16) geführt und zentriert und verspannt ist.

5. Vorrichtung nach einem der Ansprüche 1 bis 4, **dadurch gekennzeichnet, dass** zwischen der Haltevorrichtung (13) und dem Spannrahmen (14) lösbare Spannverbindungen (17) vorgesehen sind.

6. Vorrichtung nach einem der Ansprüche 1 bis 5, **dadurch gekennzeichnet, dass** der einzelne Schlitten (5) an einer sich längs der Transferlinie (2) erstreckenden ortsfesten Führung (4) gelagert ist, dass an einem Schlitten (5) ein Vorschubantrieb (7), z.B. über Zahnstange (9), angeordnet ist und dass beide Schlitten (5) durch eine Kupplungsstange (6) miteinander verbunden sind oder dass jeder Schlitten seinen eigenen Antrieb hat ohne Verbindung.

7. Vorrichtung nach einem der Ansprüche 1 bis 6, **dadurch gekennzeichnet, dass** die Lenker (10) in einer parallel zur Transferlinie (2) ausgerichteten Stellung die Haltevorrichtung (13) mit dem Spannrahmen (14) von der Bearbeitungsstation (1) zu einem Spannrahmenspeicher (20) und zurück bewegen und dass die Lenker (10) zur Annäherung an den Speicher (20) in einer zur Annäherung an die Bearbeitungsstation (1) entgegengesetzt gerichteten Schwenkbewegung antreibbar sind.

8. Vorrichtung nach einem der Ansprüche 1 bis 7, **dadurch gekennzeichnet, dass** die Lenker (10), deren Schlitten (5) und Führung (4) sowie die Haltevorrichtung (13) in Ebenen seitlich und unterhalb der in der Bearbeitungsstation (1) befindlichen Rohkarosserieteile (3) sich befinden und dass außerhalb der Führung (4) installierte Industrieroboter (18) über die Haltevorrichtung (13) hinweg gegen die Rohkarosserieteile (3) beweglich sind.

9. Vorrichtung nach einem der Ansprüche 1 bis 8, **dadurch gekennzeichnet, dass** der einzelne Lenker als Knickarm (22) nach Art eines Kniegelenkhebels ausgebildet ist und im Kniegelenk (23) ein weiterer Schwenkantrieb (24) für den freien Schenkel (28) des Knickarms (22) angeordnet ist, derart, dass beide Schwenkantriebe (24,25) so gesteuert sind, dass die am freien Schenkel (28) angelenkte Haltevorrichtung (13) eine lineare Bewegung quer zur Transferlinie (2) ausführt.

10. Vorrichtung nach einem der Ansprüche 1 bis 9 **dadurch gekennzeichnet, dass** der Spannrahmen (14) sowohl längs als auch quer zur Transferlinie (2) beweglich geführt ist, wobei in der Mitte einer an der Bearbeitungsstation (1) sich befindlichen, den Spannrahmen (14) tragenden Haltevorrichtung (13) der Lenker (30) mit einem auf die Haltevorrichtung (13) einwirkenden Schwenkantrieb (31) angelenkt ist, wobei das andere Ende des Lenkers (30) in einem längs einer ortsfesten Führung (33) beweglichen Schlitten (32) gelenkig (34) gelagert und mit einem weiteren Schwenkantrieb (35) verbunden ist.

11. Vorrichtung nach Anspruch 10, **dadurch gekennzeichnet, dass** neben der Bearbeitungsstation (1) zwei im spitzen Winkel zueinander stehende und von der Bearbeitungsstation (1) nach außen sich erweiternde Führungen (33) ortsfest angeordnet sind.

12. Vorrichtung nach Anspruch 11, **dadurch gekennzeichnet, dass** außenseitig neben der einzelnen ortsfesten Führung (33) ein Speicher (20) für Spannrahmen (14) angeordnet ist.

## Claims

1. Device (36) for handling one or more clamping frames (14) for components (3), in particular bodyshells of vehicles, in a processing station (1) with a transfer line (2), the handling device (36) having one or more rods (10, 30) which are driven in rotation, and which at one end are mounted in at least one carriage (5, 32), which can be moved by motor means along or at an angle to the transfer line (2), and at their other end have a holding device (13) for receiving the clamping frame (14).

2. Device according to Claim 1, **characterized in that** the handling device (36) has two rods (10) which are arranged in the manner of a four-bar mechanism and can rotate about parallel axes (11).

3. Device according to Claim 1 or 2, **characterized in that** the holding device (13) holds the clamping frame (14), which for its part is arranged in an upright position, in an articulated manner (12), and **in that** the advancing drive (7) of the carriages (5) and the pivoting drive (21) of the rods (10) are controlled in such a way that the resultant of the two movements leads to a substantially linear displacement of the holding device (13) transversely to the transfer line (2).

4. Device according to Claim 1, 2 or 3, **characterized in that** the clamping frame (14), in its working position, is braced and centred and guided so that it can move longitudinally and transversely with respect to the transfer line (16), on a stationary framework (15).

5. Device according to one of Claims 1 to 4, **characterized in that** releasable clamping connections (17) are provided between the holding device (13) and the clamping frame (14).

6. Device according to one of Claims 1 to 5, **characterized in that** the individual carriage (5) is mounted on a stationary guide (4) which extends along the transfer line (2), **in that** an advancing drive (7), for example over rack (9), is arranged on a carriage (5), and **in that** the two carriages (5) are connected to one another by a coupling rod (6), or **in that** each carriage has its own drive, without there being a connection.

7. Device according to one of Claims 1 to 6, **characterized in that** the rods (10), in a position which is parallel to the transfer line (2), move the holding device (13) together with the clamping frame (14) from the processing station (1) to a clamping-frame store (20) and back, and **in that** the rods (10) can be driven to approach the store (20) in a pivoting movement which is directed oppositely to the approach to the processing station (1).

8. Device according to one of Claims 1 to 7, **characterized in that** the rods (10), their carriage (5) and guide (4), and also the holding device (13), are located in planes which lie to the side of and below the bodyshell parts (3) located in the processing station (1), and **in that** industrial robots (18), which are installed outside the guide (4), can be moved onto the bodyshell parts (3) beyond the holding device (13).

9. Device according to one of Claims 1 to 8, **characterized in that** the individual rod is designed as a bending arm (22) in the manner of an articulated lever, and a further pivoting drive (24) for the free limb (28) of the bending arm (22) is arranged in the articulated joint (23), in such a manner that the two pivoting drives (24, 25) are controlled in such a way that the holding device (13) which is articulatedly mounted on the free limb (28) executes a linear movement transversely to the transfer line (2).

10. Device according to one of Claims 1 to 9, **characterized in that** the clamping frame (14) is guided so that it can move both longitudinally and transversely with respect to the transfer line, the rod (30) being articulatedly mounted, with a pivoting drive (31) acting on the holding device (13), in the centre of a holding device (13) which is located at the processing station (1) and bears the clamping frame (14), the other end of the rod (30) being mounted in an articulated manner (34) in a carriage (32) which can move along a stationary guide (33) and being connected to a further pivoting drive (35).

11. Device according to Claim 10, **characterized in that** next to the processing station (1) two guides (33), which are at an acute angle to one another and widen outwards from the processing station (1), are arranged in a stationary position.

12. Device according to Claim 11, **characterized in that** on the outer side, next to the individual stationary guide (33), there is a store (20) for clamping frames (14).

## Revendications

1. Dispositif (36) pour manipuler un ou plusieurs cadres de serrage (14) pour des éléments (3), en particulier des coques de véhicule, dans un poste de transformation (1) ayant une ligne de transport (2), le dispositif de manipulation (36) comportant un ou plusieurs bras oscillants (10, 30) entraînés de façon rotative qui sont logés à l'une de leurs extrémités dans au moins un chariot (5, 32) mobile à l'aide d'un moteur situé le long ou en angle par rapport à la ligne de transport (2) et qui présentent à l'autre de leurs extrémités un dispositif de maintien (13) destiné à recevoir le cadre de serrage (14).

2. Dispositif selon la revendication 1, **caractérisé en ce que** le dispositif de manipulation (36) présente deux bras oscillants (10) qui sont placés à la façon d'une chaîne cinématique à quatre joints articulés et qui peuvent toumer autour d'axes (11) parallèles.

3. Dispositif selon la revendication 1 ou 2 **caractérisé en ce que** le dispositif de maintien (13) maintient de façon articulée (12) le cadre de serrage (14) placé debout de son côté et que l'entraînement d'avancée (7), le chariot (5) et l'entraînement pivotant (21) des bras oscillants (10) sont commandés de telle sorte que les résultantes des deux mouvements provoquent un déplacement essentiellement linéaire du dispositif de maintien (13) transversalement par rapport à la ligne de transport (2).

4. Dispositif selon la revendication 1, 2 ou 3 **caractérisé en ce que** le cadre de serrage (14) est guidé et centré et bloqué dans sa position de travail contre une ossature (15) fixe longitudinalement et transversalement (16) par rapport à la ligne de transport.

5. Dispositif selon l'une des revendications 1 à 4 **caractérisé en ce qu'**on a prévu des raccords de serrage (17) entre le dispositif de maintien (13) et le cadre de serrage (14).

6. Dispositif selon l'une des revendications 1 à 5 **caractérisé en ce que** chaque chariot (5) est monté sur un guidage fixe qui s'étend le long de la ligne de transport (2), que sur un chariot (5) est placé un entraînement d'avancée (7) par exemple au moyen d'une crémaillère (9) et que les deux chariots (5) sont reliés par une tige de couplage (6) ou que chaque chariot a son propre entraînement sans liaison.

7. Dispositif selon l'une des revendications 1 à 6 **caractérisé en ce que** les bras oscillants (10) déplacent le dispositif de maintien (13) avec le cadre de serrage (14) dans une position ajustée parallèlement à la ligne de transport (2) depuis le poste de transformation (1) jusqu'à un magasin de cadres de serrage (20) et dans le sens inverse et que les bras oscillants (10) peuvent être entraînés pour s'approcher du magasin (20) selon un mouvement pivotant dirigé en sens contraire de celui qu'ils font pour s'approcher du poste de transformation (1).

8. Dispositif selon l'une des revendications 1 à 7 **caractérisé en ce que** les bras oscillants (10), leur chariot (5) et guidage (4) ainsi que le dispositif de maintien (13) se trouvent dans des plans à côté et au-dessous des éléments de coque (3) placés dans le poste de transformation (1) et qu'on peut déplacer des robots industriels (18) installés en-dehors du guidage (4) au moyen du dispositif de maintien (13) vers les éléments de coque (3).

9. Dispositif selon l'une des revendications 1 à 8 **caractérisé en ce que** chaque bras oscillant est formé en tant que bras articulé (22) du type d'un levier à articulation de genouillère et que dans l'articulation de genouillère (23) est placé un autre entraînement pivotant (24) pour le côté libre (28) du bras articulé (22) de telle manière que les deux entraînements pivotants (24, 25) sont commandés de sorte que le dispositif de maintien (13) articulé sur le côté libre (28) suive un mouvement linéaire transversalement par rapport à la ligne de transport (2).

10. Dispositif selon l'une des revendications 1 à 9 **caractérisé en ce que** le cadre de serrage (14) est guidé de façon mobile aussi bien longitudinalement que transversalement par rapport à la ligne de transport (2) dans des conditions où, au milieu d'un dispositif de maintien (13) placé sur le poste de transformation (1) et portant le cadre de serrage (14), le bras oscillant (30) est articulé avec un entraînement oscillant (31) qui exerce son effet sur le dispositif de maintien (13), l'autre extrémité du bras oscillant (30) étant montée de façon articulée dans un chariot (32) mobile le long d'un guidage (33) fixe et étant reliée avec un autre entraînement oscillant (34).

11. Dispositif selon la revendication 10 **caractérisé en ce que** à côté du poste de transformation (1) sont placés de façon fixe deux guidages (33) disposés en angle aigu qui s'évasent vers l'extérieur en partant du poste de transformation (1).

12. Dispositif selon la revendication 11 **caractérisé en ce que** du côté extérieur à côté de chaque guidage (33) fixe est placé un magasin (20) pour les cadres de serrage (14).
